# EUROPÄISCHE PATENTSCHRIFT

(11) **EP 1 607 334 B1**
(45) Veröffentlichungstag und Bekanntmachung des Hinweises auf die Patenterteilung: **29.08.2007**
(21) Anmeldenummer: 05013514.4
(22) Anmeldetag: 28.03.2002
(51) Int. Cl.: B65B 61/20

(54) **Verfahren und Vorrichtungen zum Aufkleben von Trinkhalmen auf Folienbeuteln**
Method and device for bonding drinking straws onto plastic bags
Procédé et dispositif pour appliquer des pailles à des sachets en plastique

(43) Veröffentlichungstag der Anmeldung: 21.12.2005
(62) Teilanmeldung aus: 02007421.7
(73) Patentinhaber: DEUTSCHE SISI-WERKE GmbH & Co. Betriebs KG, 69009 Heidelberg (DE); PIOFLEX Kunststoff in Form GmbH & Co. OHG, 79208 Denzlingen (DE)
(72) Erfinder: Wild, Hans-Peter, Dr., 69214 Eppelheim (DE); Kraft, Eberhard, 74924 Neckarbischofsheim (DE); Hägle, Klaus, 77966 Kappel-Grafenhausen (DE); Willi, Berthold, 79423 Heitersheim (DE)
(74) Vertreter: Grünecker, Kinkeldey, Stockmair & Schwanhäusser Anwaltssozietät

(56) Entgegenhaltungen:
- EP-A- 1 095 862
- US-A- 4 572 758
- US-A- 5 979 142

## Beschreibung

Die Erfindung beschäftigt sich mit dem Aufbringen von Gegenständen, wie z.B. Trinkhalmen, die in Taschen eingepackt sind, auf Behältnissen wie z.B. Getränkefolienbeuteln.

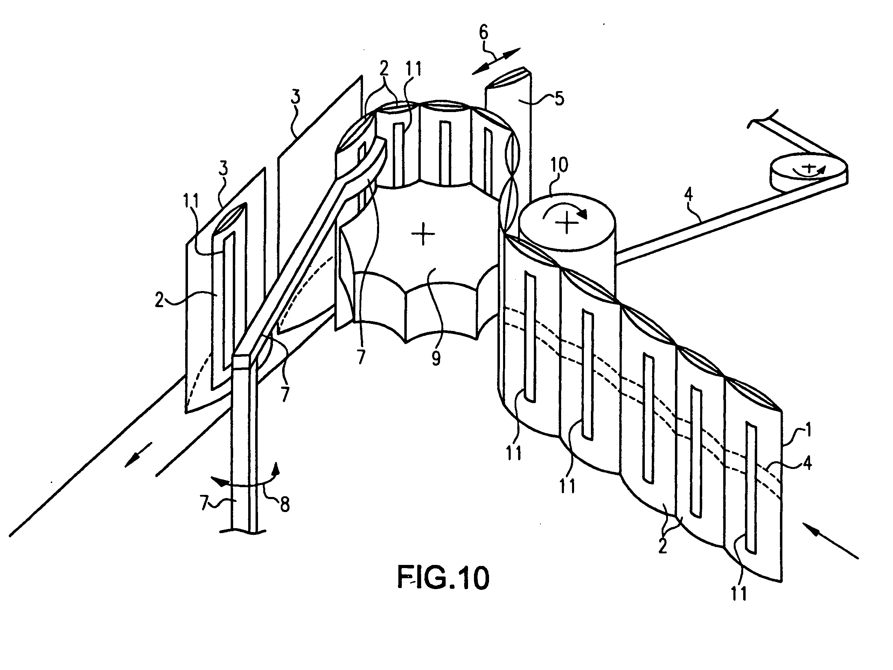

Im Stand der Technik US 5 979 142 ist es bekannt, zum Anbringen von Trinkhalmen auf Folienbeuteln so vorzugehen, wie das im folgenden anhand von Fig. 10 erläutert wird. Trinkhalme 11 sind in Folientaschen 2 eingepackt, die ihrerseits zusammenhängen und ein Taschenband 1 bilden. Auf dem Taschenband befindet sich eine Kleberschicht, die mit einem Trägerband 4 (auch Abdeckband oder Liner genannt) abgedeckt ist. Bei einer Umlenkwalze 10 wird das Trägerband 4 abgezogen, so dass die Klebestelle freiliegt. Die einzelnen Halmtaschen 2 werden im weiteren Verlauf durch einen Schneidvorgang eines Messers 5 von dem einlaufenden Taschenband 1 einzeln abgeschnitten. Das Messer kann sich dabei hin- und her bewegen und/oder auch rotieren. Durch entsprechende Einrichtungen, z. B. eine Vakuumöffnung in dem Umlenkstem 9, werden die Taschen 2 auf den Umlenkstem 9 gehalten. Eine Andrückvorrichtung 7, die in Fig. 10 als Hebel ausgestaltet ist, drückt die Tasche 2 mit dem Trinkhalm 11 gegen den Getränkebeutel 3, der an der Vorrichtung zum Aufbringen von Trinkhalmen vorbeitransportiert wird. Auf diese Weise werden Getränkebeutel 3 mit in Taschen 2 eingepackten Trinkhalmen 11 durch Aufkleben der Taschen 2 versehen.

Aufgabe der Erfindung ist es, hier weitere Verbesserungen für einen schnelles und störungsfreies Anbringen vorzuschlagen, insbesondere Verfahren und Vorrichtungen sowie Gegenstände zu schaffen, die eine Verbesserung dieses Verfahrens sowie eine Verbesserung der damit hergestellten Produkte erlauben.

Diese Aufgabe wird gelöst durch ein Verfahren nach Anspruch 1 sowie eine Vorrichtung nach Anspruch 12.

Vorteilhafte Ausführungsformen der Verfahren, sowie der Vorrichtungen sind in den abhängigen Ansprüchen offenbart.

Mit Hilfe eines Klebebandes, das Kleberzonen umfasst, die durch Nichtklebezonen in Richtung entlang des Klebebandes beabstandet sind, ist es möglich, ein erfindungsgemäßes Taschenband herzustellen, bei dem Nichtklebezonen in den Bereichen zwischen den Mitten von zwei benachbarten Taschen ausgebildet sind. Mit einem derartigen erfindungsgemäßen Taschenband ist es möglich, ein Verfahren durchzuführen, mit dem Taschen auf Behältnisse aufgeklebt werden, bei dem ein Messer, das Taschen des Taschenbandes abschneidet, nicht mit Kleber in Kontakt kommt. Dadurch wird das Verkleben des Messers, was die Standzeit des Messers beeinträchtigen könnte, verhindert.

Für die Erfindung ist es vorteilhaft, wenn ein Kleber mit hoher Anfangsklebkraft verwendet wird. Das Klebeband, das Taschenband und das Behältnis haben alle den Vorteil, dass auch mit einem weichen Kleber gearbeitet werden kann, der eine solche hohe Anfangsklebekraft aufweisen kann. Dadurch, dass eine Abdeckung des Klebers (z.B. eine Tasche) bei dem Behältnis und auch bei Ausführungsformen des Taschen- und Klebebandes über die ursprüngliche Kleberzone übersteht, kann ein gewisses Fließen des Klebers in Kauf genommen werden, ohne dass der Kleber nach außen austritt.

Mit dem Klebeband ist es möglich, vereinzelte Klebestellen auf beliebigen Gegenständen anzubringen. Dies geschieht dadurch, dass der Kleber einer Kleberzone auf dem Gegenstand zusammen mit dem Trägerband angebracht wird. Durch das abdeckende Trägerband ist ein Andrücken möglich. Anschließend, kann das Trägerband leicht entfernt werden. Dies geschieht zum einen dadurch, dass an dem Trägerband, von dem bereits der Kleber auf einen Gegenstand transferiert wurde, gezogen wird und sich das Trägerband so von der zuletzt angeklebten Klebezone löst. Auch wenn des Trägerband durchtrennt wurde, ist es einfach möglich, das Trägerband zu ergreifen und abzuziehen, da es Bereiche gibt, an denen das Trägerband nicht auf dem Gegenstand festklebt. Ein mühseliges Auffinden einer Ecke, an der das Trägerband gegriffen und abgezogen werden kann, wie es von handelsüblichen doppelseitigen Klebebändern bekannt ist, entfällt. Nach Entfernen des Trägerbands verbleibt der Kleber auf dem Gegenstand. Das Klebeband kann also als doppelseitiges Klebeband oder auch als Transferklebeband ausgeführt werden.

Besonders vorteilhafte Ausführungsformen der Vorrichtungen der Verfahren und der Gegenstände werden anhand der beiliegenden Figuren erläutert. Dabei zeigt:
- Fig. 1: eine schematische Darstellung eines Taschenbands,
- Fig. 2: verschiedene schematische Darstellungen der Ausführungsformen von Kleberzonen,
- Fig. 3: eine schematische Darstellung eines Klebebandes,
- Fig. 4: eine schematische Darstellung von verschiedenen Zuständen einer Vorrichtung bei der Durchführung eines erfindungsgemäßen Verfahrens,
- Fig. 5: eine schematische Darstellung eines Behältnisses,
- Fig. 6: eine schematische Darstellung einer Vorrichtung zur Herstellung eines Klebebandes,
- Fig. 7: eine schematische Darstellung einer Vorrichtung zur Herstellung eines Taschenbandes,
- Fig. 8: eine schematische Darstellung einer Vorrichtung zur Herstellung eines Taschenbandes,
- Fig.9: eine schematische Darstellung einer erfindungsgemäßen Vorrichtung zum Aufkleben eines Taschenbandes,
- Fig.10: eine Vorrichtung gemäß dem Stand der Technik.

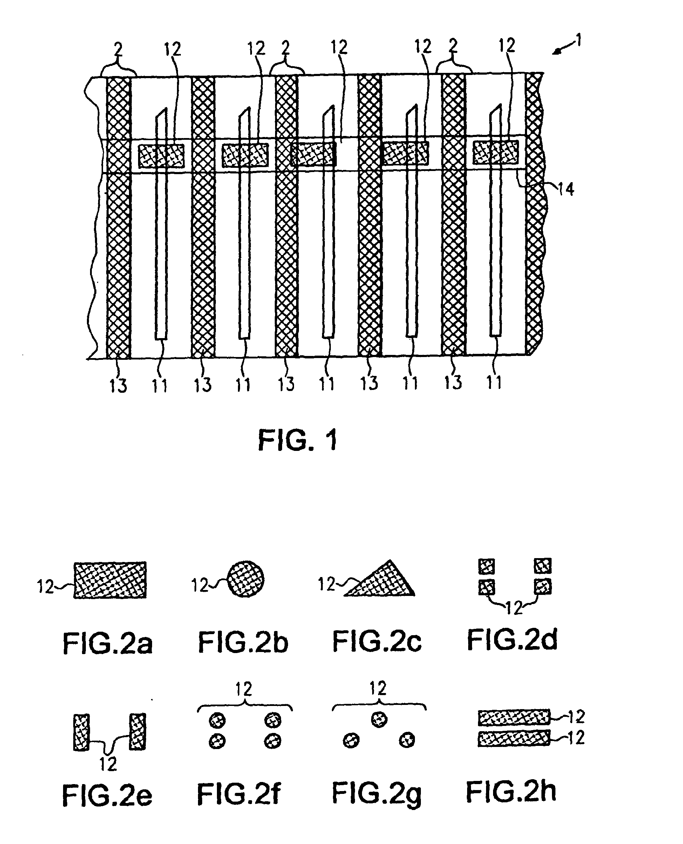

In Fig. 1 ist ein Taschenband 1 gezeigt. Das Taschenband besteht aus einem Folienmaterial und weist parallel zueinander ausgerichtete Taschen 2 auf. Die Taschen 2 des Taschenbandes 1 könnten auch längs hintereinander angeordnet sein.

Jede der Taschen 2 enthält einen oder auch mehrere Trinkhalme 11. Statt Trinkhalmen könnten auch Besteckteile, die beispielsweise aus Kunststoff gefertigt sind, Rührwerkzeuge, Zubehörteile oder kleinere Präsente in den Taschen enthalten sein, wobei auch hier jeweils ein oder mehrere derartiger Gegenstände in einer Tasche aufgenommen sein können. Für den Lebensmittelbereich haben die Taschen 2 den Vorteil, dass eine hygienisch saubere Verpackung der Halme 11 oder sonstiger Gegenstände in den Taschen 2 möglich ist.

Die Taschen 2 ergeben sich dadurch, dass in Fig. 1 vor und hinter der Zeichenebene jeweils eine dünne Folienbahn vorgesehen ist, zwischen denen sich der Trinkhalm 11 befindet. Die Folien vor und hinter der Zeichenebene sind in den Bereichen 13 miteinander verschweißt, um so die Trinkhalme 11 voneinander zu separieren. Die Bereiche 13 haben weiterhin die Funktion, dass wenn in den Bereichen 13 eine einzelne Tasche 2 des Taschenbandes 1 abgeschnitten wird, keine Aussenluft an den Trinkhalm 11 gelangen kann, so dass dieser auch nach Abschneiden der Tasche 2 hygienisch sauber bleibt.

Entlang des Taschenbandes 1 sind Kleberzonen 12 vorgesehen. Die Kleberzonen 12 befinden sich in Richtung längs des Taschenbandes 1 im Wesentlichen in der Mitte der jeweiligen Tasche 2. Wie in Fig. 1 dargestellt, sind jedoch leichte Abweichungen der genauen Position der Kleberzonen 12 in Bezug auf die Tasche 2 möglich.

Auch ist es möglich, dass sich, wie in der Mitte der Fig. 1 dargestellt, die Kleberzone 12 bis auf den Bereich 13 links von der mittleren Tasche 2 erstreckt.

Wie in Fig. 1 dargestellt ist für jede Tasche 2 eine Kleberzone 12 vorgesehen. Es können jedoch auch mehrere Kleberzonen 12 für jede Tasche 2 vorgesehen sein. Auch können mehrere Trägerbänder 4 vorgesehen sein.

Die Kleberzonen 12 wiederholen sich im Wesentlichen periodisch entlang dem Taschenband 1. Auch die Ausbildung von Taschen 2 und der Bereiche 13 in den Taschenband 1 wiederholt sich periodisch. Idealerweise ist die Periodizität der Kleberzonen 12 und die Periodizität der Taschen 2 dieselbe.

Das Material, das die Trinkhalme 11 umhüllt, kann jeder geeignete Kunststoff sein oder auch Papier, Gewebe, Folie oder Filmmaterial.

Der Kleber, der in den Kleberzonen 12 aufgebracht ist, kann jeder beliebige geeignete Kleber sein. Vorteilhaft sind Kleber mit einer hohen Anfangsklebekraft. Es können selbst Kleber verwendet werden, die eine gewisse Fließfähigkeit aufweisen, so dass sich eine gute Klebekraft ergibt. Solche Kleber werden auch weiche Kleber genannt. Ein Beispiel für eine verwendbare Klebersorte sind "Hot-Melt"-Kleber.

Die Bereiche 13 in Fig. 1 können sich auch bis ganz an den jeweiligen Trinkhalm 11 heranerstrecken, so dass der überwiegende Teil des Taschenbandes 1 aus Bereichen 13 besteht. Die Klebezone 12 kann sich auch von einem Bereich 13 über den Trinkhalm hinweg bis zu dem benachbarten Bereich 13 erstrecken.

Für das Zerschneiden des Taschenbandes 1 in einzelne Taschen 2 ist es von Vorteil, wenn die Bereiche 13 groß sind, da sich somit ein großer Bereich ergibt, in dem der Schneidvorgang zum Abtrennen einer Tasche 2 von dem Taschenband 1 erfolgen kann.

In Fig. 2 sind Ausgestaltungsformen der Kleberzone 12 dargestellt. Mögliche Formen der Kleberzone 12 sind quadratisch, rechteckig, kreisförmig, dreieckig oder sonstwie regelmäßig oder unregelmäßig geformt. Auch ist es möglich, die Kleberzone 12 in mehrere einzelne Kleberzonen mit den jeweilig vorher genannten Formen aufzuteilen. Dabei kann die Kleberzone 12 in zwei, drei, vier oder mehrere Kleberzonen aufgeteilt werden.

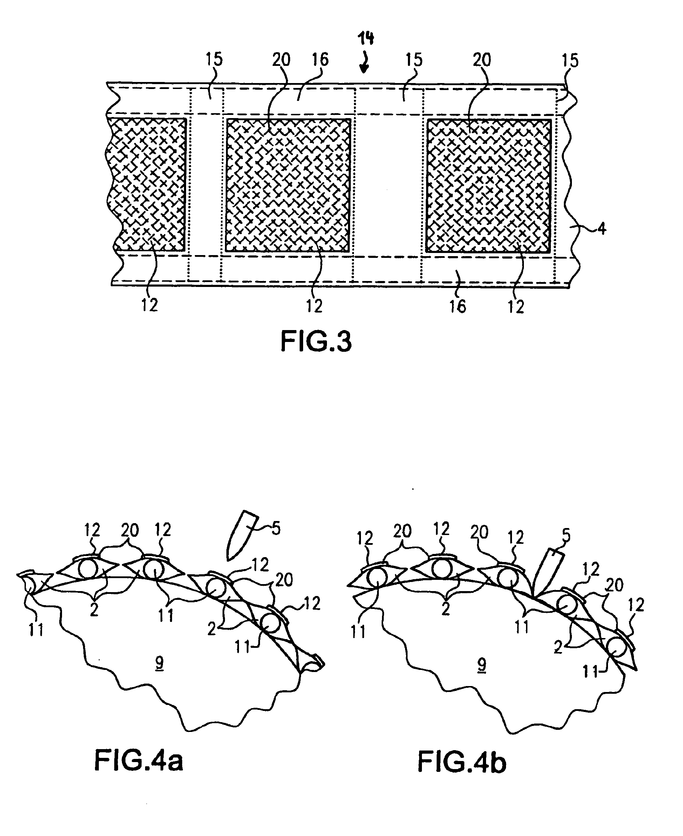

In Fig. 3 ist eine Ausführungsform eines Klebebandes 14 gezeigt. Ein derartiges Klebeband 14 kann vorteilhaft in dem Taschenband 1, wie in Fig. 1 gezeigt, vorgesehen sein. Auf einem Trägerband 4 sind Kleberzonen 12 vorgesehen. Die verschiedenen Kleberzonen 12 sind durch Nichtklebezonen 15 voneinander beabstandet. Die Nichtklebezonen 15 erstrecken sich bei der dargestellten Ausführungsform quer und zwar vom oberen Rand bis zum unteren Rand des Trägerbandes 4. Durch die Nichtklebezone 15 sind die Kleberzonen 12 entlang des Trägerbandes 4 voneinander beabstandet. Die Nichtklebezonen 15 können durch Fehlen von Kleber 20 ausgebildet sein. Auch ist es möglich, die Nichtklebezonen 15 dadurch auszubilden, dass der Kleber unwirksam gemacht wird, beispielsweise durch Bestrahlung oder Aussetzen des Klebers mit bestimmten Chemikalien, Dämpfen, Gasen, Stäuben etc.. Auch kann Kleber 20 durch eine Schicht abgedeckt werden, um die Nichtklebezone 15 zu schaffen.

Am oberen und unteren Rand des Trägerbandes 4 sind Nichtklebebereiche 16 vorgesehen, die sich entlang des Trägerbandes 4 erstrecken. Dadurch steht das Trägerband 4 in allen Richtungen über den Bereich der Klebezone 12 über, wodurch der Kleber ein wenig fließen kann, ohne dass er nach außen austritt.

Wie in Fig. 3 dargestellt, müssen die Größen der Kleberzone 12 und der Nichtklebezone 15 nicht immer identisch sein, sondern sie sollten sich im Wesentlichen ähnlich sein.

Anhand von Fig. 4 und 10 wird eine Ausgestaltungsform des Verfahrens zum Aufkleben von einer Tasche 2 auf ein Behältnis erläutert. Ein Taschenband 1, beispielsweise das in Fig. 1 beschriebene Taschenband 1, wird einer, wie in Fig. 10 dargestellten, Vorrichtung zum Aufkleben von Taschen auf Getränkebeutel zugeführt. An einer Umlenkwalze 10 wird das Trägerband 4 entfernt, dadurch das es abgezogen und abtransportiert wird. Die Umlenkwalze 9, wie sie in Fig. 10 dargestellt ist, ist in Fig. 4a und 4b in einer Draufsicht schematisch dargestellt. In Fig. 4a und 4b ist neben der Umlenkwalze 9 das jeweils von rechts einlaufende Taschenband 1 dargestellt. Das Taschenband 1 setzt sich aus nacheinanderfolgenden Taschen 2 zusammen, die jeweils einen Trinkhalm 11 enthalten. Auf der Außenseite des Taschenbandes 1 sind die Kleberzonen 12 dargestellt, in denen sich Kleber 20 auf dem Taschenband 1 befindet. Zu einem Zeitpunkt, wie in Fig. 4a dargestellt, bei dem sich vor dem Messer 5 eine Kleberzone 12 mit Kleber befindet, würde ein Schneidvorgang nicht durchgeführt. Bei dem Zustand in Fig. 4b, bei dem sich vor der Klinge 5 keine Kleberzone 12 befindet, kann das Messer an die Umlenkwalze 9 herangefahren werden, um so mit seiner scharfen vorderen Klinge eine Tasche 2 des Taschenbandes 1 abschneiden. Die Schneidbewegung des Messers wird bei dem Verfahren von einer geeigneten Steuereinrichtung so gesteuert, dass der Schnitt zwischen den Taschenmitten erfolgt. Der Schnitt erfolgt vorteilhafterweise in den Bereichen 13 des Taschenbandes 1. Der Steuereinrichtung wird mechanisch, elektrisch, optisch oder sonst irgendwie die Information zugeführt, wann, in Abhängigkeit von der Position einer Tasche 2 und oder einer Klebezone 12, der Schneidvorgang durchgeführt werden soll. Die Umlenkwalze 9, wie in Fig. 4 dargestellt, kann auch als Umlenkstem, wie in Fig. 10 schematisch dargestellt, ausgebildet werden. Die einzelnen Taschen legen sich dann in die Vertiefungen des Umlenkstems 9. Die Steuerung des Schneidvorgangs, kann auch durch die Drehposition des Umlenkstems bzw. der Umlenkwalze 9 ausgelöst bzw. gesteuert werden.

Die links vom Messer 5 vorhandenen Taschen 2 sind so alle vereinzelt und können durch entsprechende Vorrichtungen, wie beispielsweise eine Vakuumöffnung oder sonstige Klemmvorrichtungen, an der Umlenkwalze 9 gehalten werden.

Dadurch, dass das Messer 5 eine Tasche 2 des Taschenbandes 1 an einer Stelle abtrennt, an der kein Kleber einer Kleberzone 12 vorhanden ist, kommt das Messer 5 nicht mit dem Kleber der Kleberzonen 12 in Berührung. Dadurch kann ein Verkleben des Messers weitgehend ausgeschlossen werden. Ein derartiges Verkleben kann die Standzeit des Messers 5 nachteilig verkürzen bzw. zu Betriebsstörungen führen. Mit dem erfindungsgemäßen Verfahren, unter Verwendung eines Taschenbandes 1 mit einem Klebeband 14 kann so die Standzeit des Messers, d. h. die Zeit in der ein Messer ohne Probleme schneidet, beträchtlich erhöht werden.

Nachdem die Taschen 2 vereinzelt sind, werden die Taschen 2 mit einer Andrückvorrichtung 7, wie in Fig. 10 dargestellt, gegen Getränkebeutel 3 gedrückt.

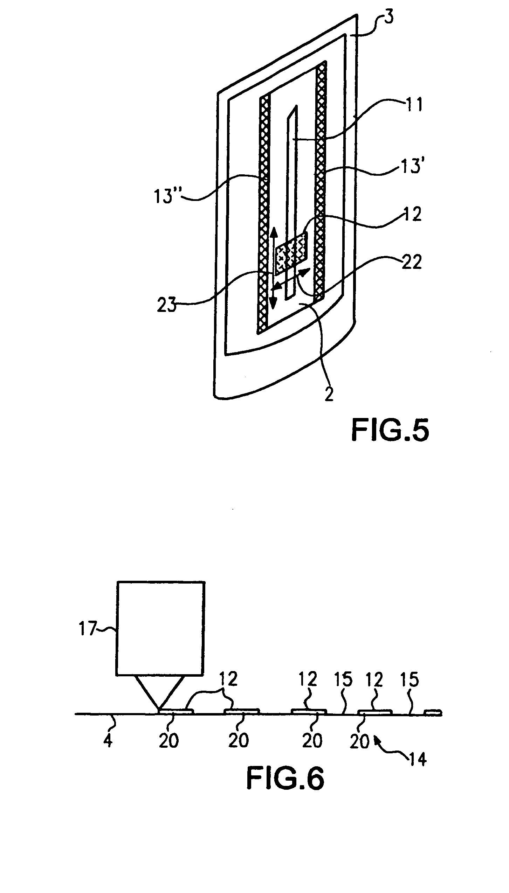

Eine weitere Ausführungsform eines Verfahrens gemäß Anspruch 1 zum Aufkleben einer Tasche 2 auf einem Behältnis 3 besteht darin, den Kleber 20 mit einem Kopf, wie er z.B. in Fig. 6 dargestellt ist, auf dem Taschenband 1 aufzubringen und anschließend eine Tasche 2 des Taschenbandes 1, wie oben beschrieben, abzuschneiden und die Taschen 2 aufzukleben. Ein Trägerband 4 kann so entfallen. Es kann auch eine Walze 31 eingesetzt werden, auf die der Kleber 20 aufgetragen wird und mit der der Kleber anschließend auf das Taschenband z. B. durch Aufdrücken aufgebracht wird. Die Oberfläche der Walze ist hierbei vorteilhafterweise zumindest teilweise schlecht haftend. Dazu kann die Walze beispielsweise eine mit Silikon, Teflon, Gummi oder einer Antihaftschicht wie z.B. einer Antihaftlackierung beschichtete oder versehene Oberfläche aufweisen. Die Walze wirkt als Transferwalze.

Der Kleber wird vorteilhafterweise gleich in durch Nichtklebezonen 15 beabstandete Kleberzonen 12 auf die Walze 31 aufgetragen und diese Zonen auf das Taschenband 2 übertragen. Die Kleberzonen 12 kommen dabei so auf den Taschen 2 des Taschenbandes 1 zu liegen, dass die Taschen 2 im Bereich der Nichtklebezonen 15 von dem Taschenband 1 im Bereich 13 abgeschnitten werden können. Bei diesem Verfahren wird ein umlaufendes Trägerband 4 sozusagen durch eine Walze ersetzt, wodurch die Zuverlässigkeit verbessert werden kann. Die Ausführungsformen des vorher beschriebenen Verfahrens oder die in den Ansprüchen 2, 5, 6, 8, 10, 11, 14 bis 16 aufgeführten Ausführungsformen sind auch vorteilhafte Ausführungsformen des hier beschriebenen Verfahrens.

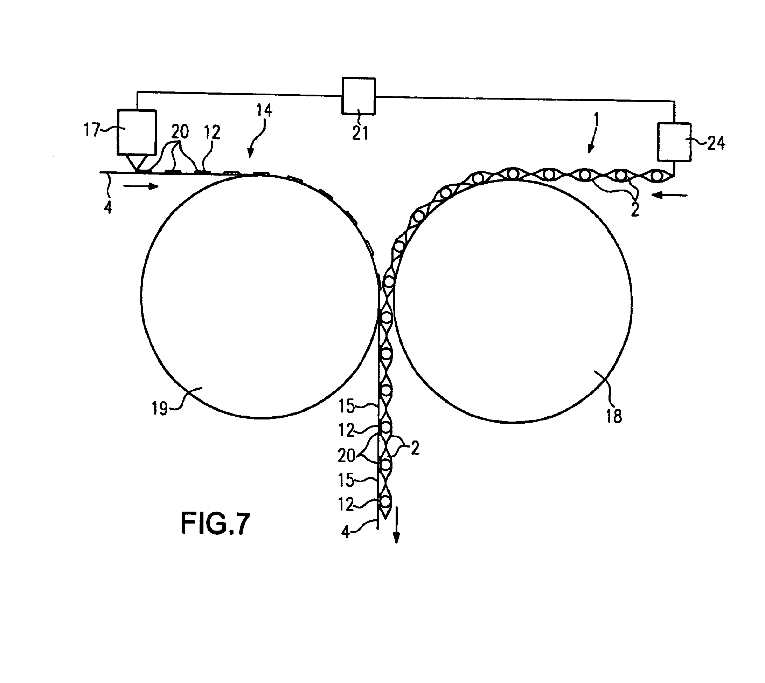

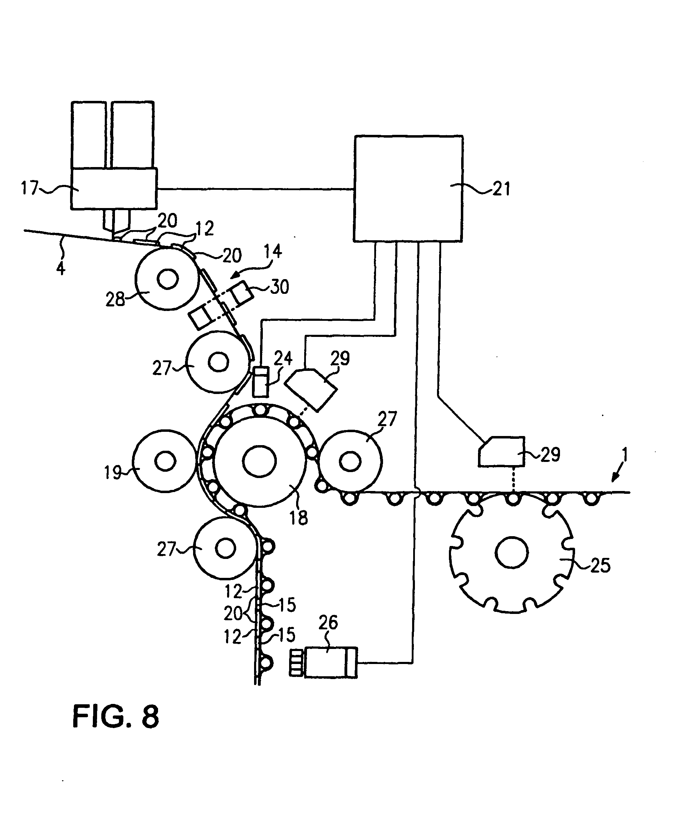

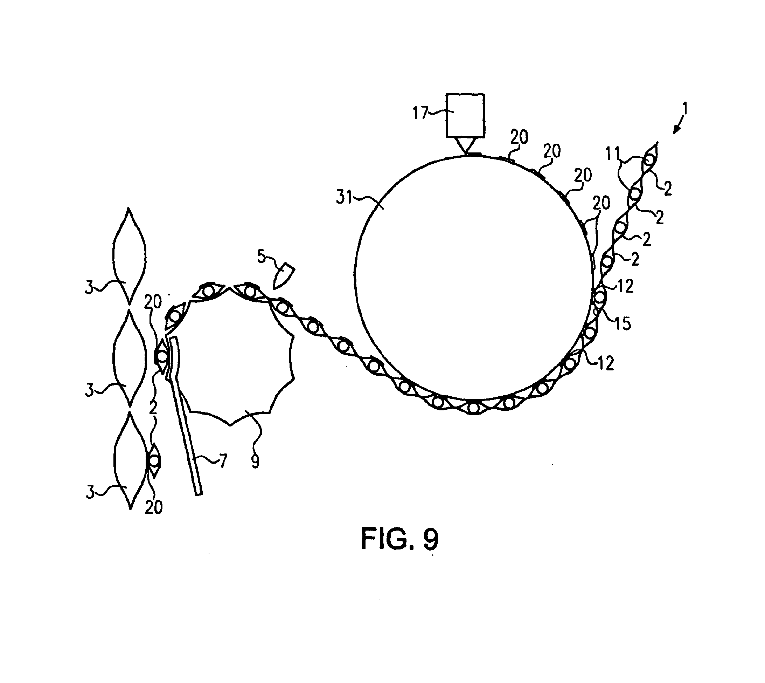

Eine Vorrichtung gemäß Anspruch 12 zur Ausführung des Verfahrens ist in Fig. 9 gezeigt. Ein Kopf 17 ist neben einer Walze 31 angeordnet und kann Kleber 20 intermittierend auf der Walze 31 aufbringen. Ein Taschenband 1 kann an der Walze 31 so vorbeigeführt werden, dass der Kleber 20 von der Walze 31 auf das Taschenband 1 übergeht. Weiterhin ist stromab der Walze 31 eine Schneideinrichtung 5 vorgesehen, um Taschen 2 zu vereinzeln. Die Taschen 2 können mit einer Andrückvorrichtung 7 auf den Behältnissen 3 aufgeklebt werden. Der Kopf 17 kann so angesteuert werden, dass der Kleber 20 so auf dem Taschenband 1 zu liegen kommt, dass Kleberzonen 12 ausgebildet werden, die in etwa in der Mitte einer Tasche 2 liegen. Dadurch können die Taschen 2 im Bereich der Nichtklebezonen 15 von dem Taschenband 1 im Bereich 13 abgeschnitten werden. Die Kleberzonen 12 sind durch Nichtklebezonen 15 beabstandet. Zur Ansteuerung des Kopfs 17 können Steuereinrichtungen 21 und Signal- oder Impulsgeber 23,24,25, wie in Fig. 7,8 gezeigt und weiter unten beschrieben, vorteilhafterweise vorgesehen sein. Auch eine Inspektionskamera wie in Fig. 8 gezeigt ist vorteilhaft einsetzbar.

Das Behältnis ist in Fig. 5 vergrößert dargestellt. Beispielhaft für Trinkgefäße, Flüssigkeitsbehältnisse oder sonstige Verpackungen wird hier nur auf einen Getränkebeutel Bezug genommen. Auf dem Getränkebeutel 3 befindet sich eine Tasche 2, in der ein Strohhalm 11 eingeschlossen ist. Weiterhin ist eine Kleberzone 12 dargestellt, die sich hier mittig in Bezug auf die Richtung quer zu der Tasche, d. h. in Richtung des Doppelpfeils 22 erstreckt. In Bezug auf die Längsrichtung der Tasche 2 kann die Kleberzone 12 an jeder beliebigen Stelle vorgesehen sein. Die bevorzugte Position kann von dem Behältnis abhängen, auf dem die Tasche aufgeklebt werden soll. Bei mit Flüssigkeit gefüllten Folienbeuteln kann eine Position in unteren Bereich zu bevorzugen sein.

Rechts und links des Trinkhalms 11 sind Teile 13' und 13" der Zonen 13 des Taschenbandes 1 zu erkennen. Die Teile 13' und 13 " haben sich durch Abschneiden von Taschen 2 von dem Taschenband 1 ergeben.

Dadurch, dass die Nichtklebebereiche 15, wie in Fig. 3 dargestellt, bei dem Klebeband 14 des Taschenbandes 1 verwendet wurden, erstreckt sich die Kleberzone 12 in Richtung des Doppelpfeils 22 nicht bis an den Rand der Tasche 2. Dadurch und dadurch, dass die Tasche 2 in ihre Längsrichtung länger ist als die Breite des Trägerbandes 4 steht die Tasche 2 in jeder der Richtungen 22 und 23 über die Kleberzone 12 über. Ohne die Nichtklebezone 15 würde sich, wie im Stand der Technik, die Kleberzone 12 bis an die seitlichen Ränder der Tasche 2 in Richtung des Doppelpfeils 22 erstrecken.

Dadurch, dass die Tasche 2 in jeder der Richtungen 22 und 23 über die Kleberzone 12 übersteht, kann auch ein weicher Kleber 20 verwendet werden, der auch geringfügig fließen kann, ohne dass der Kleber seitlich zwischen der Tasche 2 und dem Folienbeutel heraustritt. Dadurch kann ein Kleber verwendet werden, mit dem ein wesentlich höher Tack-Wert, d. h. eine höhere Anfangsklebekraft erreicht wird.

Eine Vorrichtung zur Herstellung eines Klebebandes 14 ist in Fig. 6 gezeigt. Ein Kopf 17 ist vorgesehen, um Kleber 20 portionsweise auf ein Trägerband 4 abzugeben. Die Vorrichtung zur Herstellung eines Klebebandes 14 umfasst weiterhin eine Einrichtung, die das Trägerband 4 zuführt. Dies kann beispielsweise eine Abwickeleinrichtung sein. Weiterhin umfasst die Vorrichtung Mittel zum Transportieren des Trägerbandes 4 unter dem Kopf 17 hinweg. Diese Mittel sind in Fig. 6 nicht dargestellt.

Durch Walzen oder sonstige Umlenkvorrichtungen kann vorteilhafterweise erreicht werden, dass das Trägerband 4 Kontakt mit dem Kopf 17 hat. Der Kontakt kann sehr leicht sein.

Auch ist es möglich, dass das Trägerband 4 von dem Kopf 17 beabstandet ist und der Kleber über eine gewisse Entfernung hinweg aufgetragen z.B. aufgesprüht wird.

Ein Verfahren zur Herstellung des Klebebandes 14 wird anhand von Fig. 6 erläutert. Eine nicht dargestellte Einrichtung zum Liefern von Trägerband 4 liefert von links in Fig. 6 einlaufend das Trägerband 4. Das Trägerband 4 kann beispielsweise von einer Rolle abgewickelt werden.

Während das Trägerband 4 an dem Kopf 17 vorbeiläuft, wird durch den Kopf 17 intermittierend Kleber 20 ausgegeben und auf das Trägerband 4 aufgebracht. Dadurch ergeben sich Kleberzonen 12 und nicht Nichtklebezonen 15.

Nach Auftragen des Klebers 20 in den Kleberzonen 12 auf das Trägerband 4 lauft das so hergestellte Klebeband 14 nach rechts aus Fig. 6 aus. Es kann anschließend unmittelbar weiter verwendet werden, beispielsweise bei der Herstellung eines Taschenbandes 1 oder es kann aufgerollt werden. Wird das Klebeband 14 aufgerollt, so ist es vorteilhaft, wenn ein Trägerband 4 verwendet wird, das auf beiden Seiten schlecht haftend ist. Vorteilhaft ist es weiterhin, wenn eine Seite deutlich schlechter haftend ist als die andere, damit bei Abrollen des aufgerollten Klebebandes 14 der Kleber 20 in den Kleberzonen 12 immer auf einer Seite des Trägerbandes 4 verbleibt.

Wird das hergestellte Klebeband 14 gleich weiterverwendet, so ist es ausreichend, wenn das Trägerband 4 lediglich auf einer Seite schlecht haftend ist.

Die erforderliche schlechte Haftung kann beispielsweise durch ein beschichtetes Trägerbandmaterial erreicht werden. Besonders vorteilhaft sind silikonisierte Trägerbänder 4. Es können auch Teflon, oder andere Antihaftbeschichtungen wie z. B. Antihaftlackierungen verwendet werden. Auch können Trägerbänder verwendet werden, die insgesamt aus einem Material mit einer schlechten Haftung bestehen.

Bei der Herstellung des Klebebandes 14 ist es möglich, mit mehreren Köpfen oder mit mehreren Kleberauftragelementen parallel nebeneinander auf einem von einer Mutterrolle ablaufenden Trägerbandmaterial Kleberzonen 12 mit Kleber zu versehen. Danach wird das Trägerbandmaterial in einzelne Trägerbänder 4 zerschnitten. Es ist auch möglich, erst aus einer Mutterrolle einzelne Trägerbänder 4 zu fertigen und diese dann mit dem Kleber 20 in den Klebezonen 12 zu versehen.

Eine Vorrichtung zur Herstellung eines Taschenbandes 1 ist in Fig. 7 gezeigt. Walzen 18 und 19, die verschieden oder gleichgroß sein können, sind vorgesehen, um zwischen sich ein einlaufendes Taschenband 1 und ein Trägerband 4 aufzunehmen und gegeneinander zu drücken. Weiterhin ist eine Einrichtung 17 ähnlich wie in Fig. 6 vorgesehen, um Kleber 20 in Kleberzonen 12 auf den Trägerband 4 aufzubringen. Die Vorrichtung zum Herstellen eines Taschenbandes 1 muss so ausgestaltet sein, dass die Kleberzonen 12 im Wesentlichen in der Mitte in der Richtung längs des Taschenbandes 1 auf eine Tasche 2 treffen. Insbesondere ist es vorteilhaft, wenn die Nichtkleberzonen 15 zwischen den Kleberzonen 12 auf diejenigen Teile der Taschen 2 treffen, die zu den Bereichen 13 (siehe Fig. 1) gehören, in denen die Taschen 2 später von dem Taschenband 1 abgeschnitten werden können.

Bei der in Fig. 7 schematisch dargestellten Vorrichtung wird dies dadurch erreicht, dass eine Steuereinrichtung 21 vorgesehen ist, die mit einem Signalgeber 24 und dem Kopf 17 verbunden ist. Der Signalgeber 24 kann eine bestimmte Position einer Tasche 2 erfassen. Der Signalgeber 24 kann mechanisch, elektronisch, optisch oder sonstwie ausgestaltet sein. Ein Nutenrad, in dass sich die Trinkhalme 11 einlegen kann vorteilhaft für die Ausbildung eines Signalgebers vorgesehen sein. Der Signalgeber 24 signalisiert an die Steuereinrichtung 21 beispielsweise den Beginn, die Mitte oder das Ende einer Tasche 2 oder eines Trinkhalms 11 in der Tasche 2. Die Steuereinrichtung 21 kann dann dem Kopf 17 signalisieren Kleber 20 aufzutragen. Dadurch ist es möglich, die Kleberzonen 12 und die Nichtklebezonen 15 genau auf die jeweilige Tasche 2 des Taschenbandes 1 anzupassen.

Ist es jedoch auch möglich, den Kleberauftrag 20 durch den Kopf 17 zeitlich zu takten, wobei der Takt von der Geschwindigkeit des Trägerbandes 4 oder des Taschenbandes 1 abhängig gemacht werden kann.

Die Menge an pro Klebezone 12 ausgebrachtem Kleber 20 ist vorteilhafterweise voreingestellt.

Anstatt 2 Umlenkwalzen 18 und 19 zu verwenden, um das Trägerband 4 und das Taschenband 1 zu verbinden, ist es auch möglich nur eine Walze zum Umlenken entweder des Trägerbandes 4 oder des Taschenbandes 1 zu verwenden oder auch gar keine Walze zu verwenden und das Zusammenführen des Taschenbandes 1 und des Trägerbandes 4 dadurch zu erreichen, dass eine Engstelle vorgesehen ist, durch die die beiden Bänder 1 und 4 hindurchgezogen werden.

Eine weitere Ausführungsform einer erfindungsgemäßen Vorrichtung zur Herstellung eines Taschenbandes 1 ergibt sich dadurch, dass der Kopf 17 den Kleber nicht auf das Trägerband 4 aufträgt, sondern so angeordnet ist, dass der Kleber 20 auf das Taschenband 1 aufgebracht wird. Das Abdecken der Kleberzonen 12 mit dem Trägerband 4 erfolgt jedoch analog zu der oben beschriebenen Vorrichtung. Auch hier kann der Kleberauftrag durch den Kopf 17 durch das Vorbeilaufen einzelner Taschen oder Tascheninhalte ausgelöst werden oder auch zeitlich getaktet sein, wobei der Takt von der Geschwindigkeit des Träger- oder des Taschenbandes 1 abhängt.

Fig. 8 zeigt ebenfalls eine Vorrichtung zum Herstellen eines Taschenbandes 1. Ein Kopf 17 ist vorgesehen um Kleber 20 auf ein Trägerband 4 abzugeben. Das Trägerband 4 wird durch Umlenkwalzen 28 geführt bzw. transportiert. Einrichtungen zum Spannen des Trägerbandes 4 können ebenfalls vorgesehen sein. Die Vorrichtung umfasst weiterhin eine oder mehrere Umlenkwalzen 27 für die Führung eines Taschenbandes 1. Walzen 18 und 19 sind vorgesehen, um das Trägerband 4 und das Taschenband 1 zusammenzuführen und so mit dem Kleber miteinander zu verkleben. Durch die Walzen 18 und 19 werden die beiden Bänder gegeneinander gedrückt.

Weiterhin ist ein Nutenrad 25 vorgesehen, wobei die Trinkhalme 11 des Taschenbandes 1 in den Nuten aufgenommen werden können. Dadurch ist eine Zuführung von Trinkhalmen möglich, bei der der Abstand benachbarter Trinkhalme und/oder die Raten bzw. der Takt, mit dem die Trinkhalme 11 bzw. die Taschen 2 zugeführt werden, eingestellt werden können. Auch ist es alternativ oder zusätzlich möglich, dass das Nutenrad 25 als Impulsgeber funktioniert, wobei ein durchlaufender Trinkhalm 11 einen Impuls auslöst.

Eine Prüfeinrichtung 30 zum Prüfen des Trägerbandes ist stromab von dem Kopf 17 vorgesehen. Die Prüfeinrichtung 30 kann beispielsweise dazu vorgesehen sein, einfach nur das Vorhandensein und /oder die laterale Position des Trägerbandes 4 bzw. Klebebades 14 zu prüfen. Auch kann sie Eigenschaften des Klebebandes 14, wie z.B. die Größe und/oder Beschaffenheit bzw. das Vorhandensein von Kleberzonen 12 auf dem Trägerband 4 zu prüfen. Die Prüfeinrichtung 30 kann vorteilhafterweise auch mit der Steuereinrichtung 21 verbunden sein und so bei festgestellten Fehlern je nach Fehler angemessene Maßnahmen wie Abschalten, Warnen, Nachstellen von Walzen einer Spannvorrichtung, von anderen Walzen oder vom Kopf 17 oder ähnliches auslösen.

Weiterhin ist eine Steuerungseinrichtung 21 vorgesehen, die mit einem oder mehreren Impulsgebern und dem Kopf 17 verbunden ist. Die Steuerungseinrichtung 21 kann den Kopf so ansteuern, dass dieser gezielt Kleber 20 auf das Trägerband 4 aufbringt. Einrichtungen 29 zur Führung des Taschenbandes 1 sind an geeigneten Positionen vorgesehen.

Ein Impulsgeber 24 ist bei der Walze 18 vorgesehen und dazu ausgebildet, vorbeilaufende Trinkhalme zu erkennen. Zum Erkennen eines Trinkhalms kann der Impulsgeber 24 beispielsweise optisch, mechanisch elektronisch oder sonstartig ausgebildet sein. Er ist mit der Steuereinrichtung 21 verbunden und kann dieser Steuerimpulse zuleiten.

Eine Inspektionskamera 26, die mit der Steuereinrichtung 21 verbunden ist, ist vorgesehen, um Bilder des fertig hergestellten Taschenbandes 1 aufzunehmen. Aus den Bildern können beispielsweise in der Steuereinrichtung 21 verschiedene Parameter durch geeignete Bildbearbeitungs- und Bildauswertungssoftware bestimmt werden. Dazu gehören vorteilhafterweise die Größe der Nichtklebezone 15, die Größe der Kleberzone 12, die korrekte Position der Kleberzone 12 in Bezug auf den Trinkhalm 11 und ein korrekter Abstand zwischen den Kleberzonen 12.

Die Inspektionskamera 26 kann zu Kontroll- oder auch Steuerzwecken eingesetzt werden. Beispielsweise ist es durch die Inspektionskamera 26 möglich, die relative Position der Kleberzone 12 in Bezug auf eine Tasche 2 des Taschenbandes 1 während des Betriebs zu kontrollieren und so eventuell den Klebeauftrag durch den Kopf 17 zeitlich nachzujustieren, d. h. im Vergleich zu vorher etwas zu verzögern oder etwas zu verfrühen.

Bei der Vorrichtung in Figur 8 ist es auch möglich, dass der Kopf 17 den Kleber 20 in Kleberzonen 12 auf das Taschenband 1 aufbringt.

Im Folgenden werden Verfahren zum Herstellen eines Taschenbandes 1 erläutert. Bei den beiden Verfahren wird ein Trägerband 4 und ein Taschenband 1 zugefördert. Das Taschenband 1 kann beispielsweise aus einem Vorratsbehälter herausgezogen werden oder von einer Walze abgerollt werden. Das Trägerband 4 kann ebenfalls beispielsweise von einer Spule abgerollt werden. Bei beiden Verfahren werden weiterhin das Trägerband 4 und das Taschenband 1 durch entsprechende Einrichtungen 18 und 19 miteinander in Kontakt gebracht. Ein Signalgeber 23,24,25 detektiert das Vorbeilaufen eines bestimmten Teils des Taschenbandes 1 an die Steuerungseinrichtung 21. Die Steuerungseinrichtung 21 steuert daraufhin den Kopf 17 so an, dass er Kleber 20 in Kleberzonen 12 ausgibt. Bei einem Verfahren kann der Kleber auf das Trägerband 4 ausgegeben werden, bei einem anderen erfindungsgemäßen Verfahren kann der Kleber auf das Taschenband 1 ausgegeben werden. Wird der Kleber auf das Taschenband 1 aufgebracht, so wird er durch die Steuerungseinrichtung 21 so aufgebracht, dass er in Richtung längs des Taschenbandes 1 im Wesentlichen in der Mitte auf jeder Tasche 2 aufgebracht wird. Die klebefreien Zonen 15 liegen im Wesentlichen in dem Bereich der in Fig. 1 mit 13 gekennzeichnet ist, d. h. in dem Bereich, in dem eine Tasche 2 von dem Taschenband 1 abgeschnitten werden kann.

Wird der Kleber durch den Kopf 17 auf das Trägerband 4 aufgebracht, so findet der Kleberauftrag in den Kleberzonen 12 so statt, dass bei dem Zusammenfügen des Trägerbandes 4 mit dem Taschenband 1 die Kleberzonen 12 im Wesentlichen in Längsrichtung des Taschenbandes 1 mittig in Bezug auf die jeweiligen Taschen 2 zum liegen kommen. Die Nichtklebezonen 15 kommen im Wesentlichen in den Bereichen 13 des Taschenbandes 1 zum liegen. Die Steuerung des Kopfes 17 für den Auftrag des Klebers 20 in Kleberzonen 12 kann auch durch Vorgabe eines zeitlichen Taktes erfolgen, wobei der Takt von der Geschwindigkeit des Trägerbandes 4 oder des Taschenbandes 1 abhängt.

Das so hergestellte Taschenband 1 kann anschließend mit einer Inspektionskamera 26, wie oben beschrieben, inspiziert werden.

Das so hergestellte Taschenband 1 kann anschließend aufgerollt oder in einer Verpackung lose aufeinandergelegt werden. Auch ist es möglich, dass so hergestellte Taschenband 1 gleich mit einer Vorrichtung, wie sie in Fig. 4 und Fig. 10 dargestellt ist, zu verwenden. In diesem Fall ist es möglich, dass in Fig. 10 dargestellte entfernte, d. h. über die Umlenkwalze 10 abgezogene Trägerband 4 der Vorrichtung, wie sie in Fig. 7 dargestellt ist, links wieder zuzuführen und so eine geschlossenen Kreislauf des Trägerbands 4 zu erreichen. Auch ist es möglich das abgezogene Trägerband 4 aufzuwickeln und wieder zur Herstellung von Klebeband 14 oder Taschenband 1 einzusetzen.

## Patentansprüche

1. Verfahren zum Aufkleben mindestens einer Tasche (2), insbesondere einer Folientasche (2), auf die Außenseite eines Behältnisses (3), insbesondere Getränkebeutels (3), mit folgenden Schritten:
- auf einem Taschenband (1) wird ein Kleber (20) in entlang des Taschenbandes (1) voneinander durch Nichtklebezonen (15) beabstandete Kleberzonen (12) vorgesehen,
- dann wird mit einem Schneidvorgang (6) mindestens eine Tasche (2) von dem Taschenband (1) abgeschnitten, ohne vorherige Verwendung eines Trägerbands und
- die Tasche (2) mit dem Kleber (20) auf das Behältnis (3) geklebt.

2. Verfahren nach Anspruch 1, **dadurch gekennzeichnet, dass** der Kleber (20) auf einer Walze, vorzugsweise in voneinander durch Nichtklebezonen (15) beabstandete Kleberzonen (12), aufgebracht wird und mit der Walze auf das Taschenband (1) aufgebracht wird.

3. Verfahren nach Anspruch 1 oder 2, **dadurch gekennzeichnet, dass** die Kleberzonen (12) und die Nichtklebezonen (15) in vorbestimmten Bereichen relativ zu den Taschen (2) des Taschenbandes (1) vorgesehen sind.

4. Verfahren nach einem der Ansprüche 1 bis 3, **dadurch gekennzeichnet, dass** ein Kleber mit einer hohen Anfangsklebekraft beispielsweise ein weicher Kleber (20), vorzugsweise ein Hot-Melt-Kleber (20) verwendet wird.

5. Verfahren nach einem der Ansprüche 1 bis 4, **dadurch gekennzeichnet, dass** der Schneidvorgang mit einer Klinge (5) und/oder einem Messer (5) erfolgt, das sich hin- und herbewegt und/oder rotiert.

6. Verfahren nach einem der Ansprüche 1 bis 5, **dadurch gekennzeichnet, dass** die Nichtklebezonen (15) durch Fehlen, Unwirksammachung oder Abdeckung von Kleber (20) ausgebildet sind.

7. Verfahren nach einem der Ansprüche 1 bis 6, **dadurch gekennzeichnet, dass** der Schneidvorgang zwischen den Tascheninhalten (11) erfolgt.

8. Verfahren nach einem der Ansprüche 1 bis 7, **dadurch gekennzeichnet, dass** die Tasche (2) mit mehreren Kleberzonen (12) an dem Behältnis (3) aufgeklebt wird.

9. Verfahren nach einem der Ansprüche 1 bis 8, **dadurch gekennzeichnet, dass** die Taschen (2) des verwendeten Taschenbandes (1) einen Trinkhalm (11) und/oder ein Besteckstück und/oder ein Rührwerkzeug und/oder ein Zubehörteil und/oder ein kleines Präsent umfassen.

10. Verfahren nach einem der Ansprüche 1 bis 9, **dadurch gekennzeichnet, dass** ein Taschenband (1) verwendet wird, bei dem die Kleberzonen (12) in Richtung längs Taschenbandes (1) im Wesentlichen mittig in Bezug auf die Taschen (2) vorgesehen sind.

11. Verfahren nach einem der Ansprüche 1 bis 10, **dadurch gekennzeichnet, dass** das Behältnis (3) ein Trinkgefäß (3), ein Flüssigkeitsbehältnis (3) oder eine Verpackung (3) ist.

12. Vorrichtung zum Aufkleben mindestens einer Tasche (2), insbesondere einer Folientasche (2), auf die Außenseite eines Behältnisses (3), insbesondere Getränkebeutels (3), mit:
- einer Schneideinrichtung (5) zum Abschneiden einer Tasche 2 von einem Taschenband 1
- einer Andrückvorrichtung (7) zum Aufkleben der Tasche (2) auf dem Behältnis (3)
**dadurch gekennzeichnet, dass**
eine Einrichtung (17, 31) zum Aufbringen von Kleber (20) auf das Taschenband (1) vorgesehen ist, mit der der Kleber (20) in von Nichtklebezonen (15) beabstandeten Kleberzonen (12) auf das Taschenband (1) aufgebracht werden kann, so dass das Taschenband ohne Trägerband zur Schneideinrichtung geführt werden kann.

13. Vorrichtung nach Anspruch 12 **dadurch gekennzeichnet, dass** die Einrichtung zum Aufbringen von Kleber (20) eine Walze umfasst.

## Claims

1. A method for sticking at least one pocket (2), in particular a film pocket (2), onto the outside of a container (3), in particular a drinks pouch (3), comprising the following steps:
- an adhesive (20) is provided on a pocket tape (1) in adhesive zones (12) spaced apart from one another along the pocket tape (1) by non-adhesive zones (15),
- then at least one pocket (2) is cut off within a cutting process (6) from the pocket tape (1) without previous use of a carrier tape, and
- the pocket (2) is stuck to the container (3) with the adhesive (20).

2. The method according to Claim 1, **characterised in that** the adhesive (20) is applied to a roller, preferably in adhesive zones (12) spaced apart from one another by non-adhesive zones (15) and is applied with the roller onto the pocket tape (1).

3. The method according to Claim 1 or 2, **characterised in that** the adhesive zones (12) and the non-adhesive zones (15) are provided in predetermined sections relative to the pockets (2) of the pocket tape (1).

4. The method according to one of the Claims 1 to 3, **characterised in that** an adhesive with a high initial adhesive force is used, for example a soft adhesive (20), preferably a hot-melt adhesive (20).

5. The method according to one of the Claims 1 to 4, **characterised in that** the cutting process takes place with a blade (5) and /or a knife (5) which moves to and fro and /or rotates.

6. The method according to one of the Claims 1 to 5, **characterised in that** the non-adhesive zones (15) are formed by omitting the adhesive (20), rendering it ineffective or covering it.

7. The method according to one of the Claims 1 to 6, **characterised in that** the cutting process occurs between the pocket contents (11).

8. The method according to one of the Claims 1 to 7, **characterised in that** the pocket (2) is stuck to the container (3) with a plurality of adhesive zones (12).

9. The method according to one of the Claims 1 to 8, **characterised in that** the pockets (2) of the applied pocket tape (1) enclose a drinking straw (11) and/or an item of cutlery and/or a stirring tool and/or an accessory part and/or a small gift.

10. The method according to one of the Claims 1 to 9, **characterised in that** a pocket tape (1) is used with which the adhesive zones (12) are provided in the direction longitudinal to the pocket tape (1), mainly centrally in relation to the pockets (2).

11. The method according to one of the Claims 1 to 10, **characterised in that** the container (3) is a drinking vessel (3), a container for liquid (3) or a package (3).

12. A device for sticking at least one pocket (2), in particular a film pocket (2), onto the outside of a container (3), in particular a drinks pouch (3), comprising
- a cutting device (5) for cutting off a pocket (2) from a pocket tape (1),
- a pressure device (7) for sticking the pocket (2) onto the container (3)
**characterised in that**
a device (17, 31) for applying adhesive (20) to the pocket tape (1) is provided with which the adhesive (20) can be applied to the pocket tape (1) in adhesive zones (12) spaced apart by non-adhesive zones (15), so that the pocket tape can be fed without carrier tape to the cutting device.

13. The device according to claim 12, **characterised in that** the device for applying adhesive (20) comprises a roller.

## Revendications

1. Procédé pour coller au moins un sachet (2), en particulier un sachet plastique (2), sur le côté extérieur d'un récipient (3), en particulier d'un sachet pour boissons (3), comprenant les étapes suivantes:
- on prévoit sur un ruban de sachets (1) une colle (20) dans des zones collantes (12) espacées les unes des autres par des zones non collantes (15) le long du ruban de sachets (1),
- au moins un sachet (2) est ensuite découpé du ruban de sachets (1) grâce à un processus de coupe (6), et ce, sans utilisation préalable d'un ruban de support et
- le sachet (2) avec la colle (20) est collé sur le récipient (3).

2. Procédé selon la revendication 1, **caractérisé en ce que** la colle (20) est appliquée sur un cylindre, de préférence dans des zones collantes (12) espacées les unes des autres par des zones non collantes (15), et **en ce qu'**elle est appliquée avec le cylindre sur le ruban de sachets (1).

3. Procédé selon la revendication 1 ou 2, **caractérisé en ce que** les zones collantes (12) et les zones non collantes (15) sont prévues dans des zones prédéfinies par rapport aux sachets (2) du ruban de sachets (1).

4. Procédé selon l'une quelconque des revendications 1 à 3, **caractérisé en ce que** l'on utilise une colle avec une grande force d'adhésion de départ, par exemple une colle tendre (20), de préférence une colle hot-melt (20).

5. Procédé selon l'une quelconque des revendications 1 à 4, **caractérisé en ce que** le processus de coupe s'effectue avec une lame (5) et/ou un couteau (5), qui se déplace dans le sens aller et retour et/ou qui tourne.

6. Procédé selon l'une quelconque des revendications 1 à 5, **caractérisé en que** les zones non collantes (15) sont réalisées grâce à l'absence, la neutralisation, ou le recouvrement de la colle (20).

7. Procédé selon l'une quelconque des revendications 1 à 6, **caractérisé en ce que** le processus de coupe s'effectue entre les contenus des sachets (11).

8. Procédé selon l'une quelconque des revendications 1 à 7, **caractérisé en ce que** le sachet (2) est collé sur le récipient (3) avec plusieurs zones collantes (12).

9. Procédé selon l'une quelconque des revendications 1 à 8, **caractérisé en ce que** les sachets (2) du ruban de sachets (1) utilisé contiennent une paille (11) et/ou un élément de couvert et/ou un élément pour remuer et/ou un accessoire et/ou un petit présent.

10. Procédé selon l'une quelconque des revendications 1 à 9, **caractérisé en ce qu'**un ruban de sachets (1) est utilisé, pour lequel les zones collantes (12) sont prévues en direction le long du ruban de sachets (1), essentiellement au milieu par rapport aux sachets (2).

11. Procédé selon l'une quelconque des revendications 1 à 10, **caractérisé en ce que** le récipient (3) est un récipient à boisson (3), un conteneur à liquides (3) ou un emballage (3).

12. Dispositif servant à coller au moins un sachet (2), en particulier un sachet en feuille (2), sur le côté externe d'un récipient (3), en particulier d'un sachet pour boissons (3), comportant :
- un dispositif de coupe (5) destiné à découper le sachet (2) d'un ruban de sachets (1)
- une dispositif de pression (7) destiné à coller le sachet (2) sur le récipient (3)
**caractérisé en ce**
**qu'**un dispositif (17, 31) destiné à appliquer de la colle (20) est prévu sur le ruban de sachets (1), lequel permet d'appliquer la colle (20) sur le ruban de sachets (1) dans des zones collantes (12) espacées des zones non collantes (15), de telle sorte que le ruban de sachets sans ruban support peut être guidé vers le dispositif de coupe.

13. Dispositif selon la revendication 12, **caractérisé en ce que** le dispositif destiné à appliquer de la colle (20) comporte un cylindre.
